# EUROPEAN PATENT SPECIFICATION

(11) **EP 0 685 001 B1**
(45) Date of publication and mention of the grant of the patent: **23.04.1997**
(21) Application number: 94906805.0
(22) Date of filing: 16.02.1994
(51) Int. Cl.: C22B 7/02

(54) **PROCESS FOR THE TREATMENT OF ELECTRIC ARC FURNACE DUST**
VERFAHREN ZUR BEHANDLUNG VON LICHTBOGENOFEN-FLUG-STAUB
PROCEDE DE TRAITEMENT DE LA POUSSIERE D'UN FOUR A ARC ELECTRIQUE

(30) Priority: 16.02.1993 US 18032
(43) Date of publication of application: 06.12.1995
(73) Proprietor: Terra Gaia Environmental Group Inc, Vancouver, British Columbia V6B 5A1 (CA)
(72) Inventor: McELROY, Roderick O., Vancouver, British Columbia V6R 2T4 (CA)
(74) Representative: Haecker, Walter
(86) International application number: PCT/CA94/00079
(87) International publication number: WO 94/19501

(56) References cited:
- EP-A- 0 244 910
- BE-A- 1 000 323
- GB-A- 2 051 765
- US-A- 2 305 829
- US-A- 3 849 121
- US-A- 4 610 721
- US-A- 4 614 543

## Description

### FIELD OF THE INVENTION

This invention relates to a process for the treatment of Electric Arc Furnace (EAF) dust.

### BACKGROUND OF THE INVENTION

In the recycling of scrap metal, the electric arc furnace process, in which the scrap metal is melted by forming electric arcs between graphite electrodes and the scrap metal, is commonly used. High quality steels can be made by this process. However, during the recycling process, zinc and other non-ferrous metals, present in the scrap metal, as well as some of the iron, are "evaporated" forming minute particles of the oxides of these metals. These particles settle as dust in the electric arc furnace flues. The dust is unsuitable for recycling due to the buildup of the non-ferrous content which has a deleterious effect on the steel produced. Typically, the dust contains about 25 per cent zinc, 25 per cent iron, 5 per cent lead, some tin, cadmium, chromium and copper, the remainder being silica, lime and alumina.

The disposal of this dust has become a major problem for steel producers as, due to the strict environmental legislation in countries such as Canada and the U.S., the dust can no longer be simply disposed of as landfill because of the constant danger of the toxic or hazardous metal components thereof, such as lead, chromium and cadmium, being leached out by rain or underground water to contaminate rivers, lakes and other natural resources. Hence, the treatment of the dust to remove the hazardous or toxic metals therefrom so that it can safely be used as landfill has become a priority. In order to carry out the treatment on an economical basis, an effort has been made to render the process feasible by remarketing of the non-ferrous metals removed from the dust during treatment, notably zinc and, to a lesser extent, lead. However, efforts in this direction have so far not been entirely successful.

BE-A-1000323 discloses a process for recovering heavy metals, such as zinc and lead, from materials, such as furnace dust. The dust is reacted with spent acidic galvanizing bath containing ferric chloride to precipitate goethite. This reaction is carried out below 90°C. It is well known that in a chloride environment, high temperatures become impractical and temperatures of about 210°-215°C represent an upper limit which can be tolerated due to the highly corrosive nature of the chloride system. The low temperature at which the reaction in BE-A-1000323 is carried out is well below the temperature required for the conversion of goethite to hematite, such as from 225°-300°C as disclosed by US-A-4610721, which relates to a zinc recovery process in a sulphate environment. In the latter environment, the higher temperatures required for conversion to hematite can be tolerated, but such an operating temperature would not be practical in a chloride system, due to problems with containment at the temperature and steam pressure.

It is accordingly an object of the present invention to provide a process for the treatment of EAF dust which is economically feasible and which can be carried out at temperatures which are below the upper limits which are practical for a chloride system.

### SUMMARY OF THE INVENTION

According to the invention, there is provided a process for the treatment of electric arc furnace dust, comprising a mixture of zinc, iron and lead oxides, which comprises the steps of leaching the dust with a leach solution containing ferric chloride to produce a slurry containing a hydrous iron oxide; and converting the hydrous iron oxide to a filterable hematite by heat treatment of the slurry at an elevated temperature and pressure in the presence of free acid.

The heat treatment is preferably carried out at a temperature of at least 140°C.

The process may further comprise the steps of dissolving zinc present in the dust during said leaching with said leach solution to provide a solution of zinc chloride; and separating the zinc chloride from the solution by solvent extraction using a solvating extractant.

The leach solution preferably also contains a non-ferric chloride. The concentration of ferric chloride in the leach solution may be from about 35 to about 40 grams per litre. The non-ferric chloride may be calcium chloride, sodium chloride or potassium chloride and having a chloride concentration of about 140 grams per litre.

The method may further comprise the steps of subjecting the slurry to a liquid/solid separation step at a temperature of at least 80°C to provide a residue containing hematite and a solution containing zinc chloride and lead chloride; and precipitating the lead chloride from the solution by cooling the solution to a temperature below 80°C.

The process may further comprise the steps of stripping the zinc chloride from the extractant to provide an aqueous zinc chloride solution and subjecting the zinc chloride solution to electrolysis to produce zinc metal and chlorine gas. Alternatively, the process may comprise the steps of stripping the zinc chloride from the extractant to provide an aqueous zinc chloride solution, treating the zinc chloride solution with sulphuric acid to produce a zinc sulphate solution and hydrochloric acid and recycling the hydrochloric acid to the leaching step.

Also according to the invention, there is provided a process for the treatment of electric arc furnace dust comprising a mixture of zinc, iron and lead oxides, which comprises the steps of reacting the dust with ferric chloride, in a solution containing at least about 140 g/L chloride, at an elevated temperature and pressure to produce a filterable hematite residue and to dissolve lead and zinc present in the dust to form a solution containing zinc chloride and lead chloride; and separating the zinc chloride from the solution by solvent extraction using a solvating extractant.

### BRIEF DESCRIPTION OF THE DRAWINGS

The invention will now be described, by way of an example, with reference to the accompanying drawings, in which:
Figure 1 is a flow diagram of an autoclave circuit of a plant for treating EAF dust;
Figure 2 is a flow diagram of a lead crystallization circuit of the plant;
Figure 3 is a flow diagram of a solvent extraction circuit of the plant;
Figure 4 is a flow diagram of a circuit for converting pregnant zinc chloride solution to a zinc sulphate solution for further treatment in a zinc refinery; and
Figure 5 is a flow diagram of a circuit for the treatment of raffinate prior to disposal thereof.

### DETAILED DESCRIPTION OF PREFERRED EMBODIMENT

In the description below an overview of the process is given first. Thereafter, the process is described with reference to the drawings.

The first step in the process is the leaching of the flue dust in a ferric chloride solution at atmospheric pressure. The dust is delivered to a mixing tank in which it is mixed with a ferric chloride (FeCl₃) solution. Hydrolysis of the ferric chloride produces hydrochloric acid which partially dissolves the zinc oxide (ZnO) and lead oxide (PbO) present in the dust. The reaction can be summarized by the following equation: ${\text{3MO + 2FeCl}}_{\text{3}} {\text{+ H}}_{\text{2}} {\text{O → 2FeO·OH + 3MCl}}_{\text{2}}$where M = zinc or lead.

Non-toxic metal oxides, such as calcium oxide (CaO), magnesium oxide (MgO) and manganese oxide (MnO), are also dissolved by this reaction. Zinc present in the form of zinc ferrite (ZnO·Fe₂O₃) is not completely dissolved in this step.

The concentration of the FeCl₃ in the solution should be sufficient to provide the stoichiometric amount of Fe³⁺ required to completely dissolve all the zinc, lead, calcium, magnesium and manganese oxides, as well as to leave a surplus of Fe³⁺ (30 g/L iron as FeCl₃) to maintain acidity.

The leach solution should also contain at least 140 g/L of chloride, but higher levels up to saturation are acceptable. This is required for the zinc extraction step which will be described below. As sources of chloride, calcium, sodium or potassium chlorides are all suitable, either alone or in combination. For a typical EAF dust, an initial leach pulp solids content of 100 g/L and ferric chloride content of 50 to 60 g/L iron (as FeCl₃) is considered to be near optimal for an initial leach pulp comprising 150g EAF dust per litre of leach solution. Higher ratios of FeCl₃ to MO can be used but a large excess of ferric chloride will require excessive amounts of scrap for Fe³⁺ reduction before solvent extraction. The extra chloride can be provided, for example, as calcium chloride at a concentration of about 200 g/L (as CaCl₂).

The atmospheric leach has been tested at temperatures from 5°C to 104°C (atmospheric boiling point). Due to the subsequent high temperature conditioning, the temperature of the atmospheric leach does not appear to be of any particular importance, and complete dissolution of zinc is not obtained within realistic retention time even at 104°C. It has been found that an initial slurry solids content in the range of 100 g/l provides an acceptable pulp viscosity. It is expected that a solids content of about 200 g/L is probably a reasonable upper limit.

The second step in the process is the conditioning of the slurry. The hydrous iron oxide slurry produced by the atmospheric leach is very slow settling and difficult to filter. In the conditioning step, the slurry from the atmospheric leaching step is treated in a pressure vessel or autoclave to convert the hydrous iron oxide slurry to a crystalline settleable and filterable residue. The leached slurry is heated in the autoclave to a temperature of at least 140°C and is maintained in the autoclave for a residence time of at least 240 minutes. At higher temperatures, shorter residence times are acceptable. A near optimum combination of temperature and retention time is 90 minutes at 175°C.

The mechanism by which the slurry is conditioned (i.e. rendered settleable and filterable) is conversion of the low temperature stable goethite (FeO·OH) or hydrous iron oxide to crystalline hematite (Fe₂O₃) at temperatures above 140°C in an acidic chloride solution. The reaction can be summarized as follows: ${\text{2FeO·OH → Fe}}_{\text{2}} {\text{O}}_{\text{3}} {\text{↓ + H}}_{\text{2}} \text{O}$

The autoclave treatment also completes extraction of zinc from the zinc ferrite: ${\text{ZnO·Fe}}_{\text{2}} {\text{O}}_{\text{3}} {\text{+ 2HCl → ZnCl}}_{\text{2}} {\text{+ Fe}}_{\text{2}} {\text{O}}_{\text{3}} {\text{+ H}}_{\text{2}} \text{O}$

The next step in the process is a liquid/solids separation step which involves hot filtration of the conditioned slurry with brine washing to produce a residue (principally iron oxide) which is low enough in toxic or hazardous heavy metals to be commercially utilized, e.g., as a pigment, or to be safely landfilled. Options for the treatment of the conditioned slurry comprise a hot direct filtration/washing; a hot thickening-filtration-washing; and a counter current decantation (CCD) washing, followed by filtration. The preferred option is hot thickening, filtration of thickened pulp and washing with process solution followed by a hot water displacement wash. The criteria for selecting this sequence involve maximization of zinc and lead recovery combined with minimization of dilution by added wash water. Added wash water must be at least partly removed from the circuit by evaporation, with attendant energy cost. Effective removal of lead requires washing with hot chloride brine solution, since the lead chloride formed by hydrochloric acid leaching has low solubility in water. Reheated chloride brine recycle from the zinc solvent extraction is a suitable wash liquor and, under normal circumstances, a combination of filtration, hot brine wash and hot water wash will provide an economically optimum recovery of both heavy metals and brine.

During execution of the above steps, it is important to maintain the pulp, the solution and the filter cake at a temperature above 80°C to counteract the precipitation of lead chloride.

Lead can be largely separated from the solution by cooling to precipitate lead chloride. The lead chloride is then allowed to settle to produce a dense pulp which can be filtered and then reacted with scrap iron (cementation) in a small vessel to produce crude lead which can be further refined: ${\text{Fe}}^{\text{0}} {\text{+ PbCl}}_{\text{2}} {\text{→ Pb}}^{\text{0}} {\text{+ FeCl}}_{\text{2}}$

Zinc is recovered by the separation of zinc chloride from the solution by solvent extraction using a solvating extractant followed by water stripping and zinc recovery by electrolysis.

The removal of zinc from the leach solution by solvating extractant requires the high (140 g/L or higher) chloride concentration already referred to above. As stated above, zinc leaves the leach solution as ZnCl₂ which is solvated by the organic extracting reagent. This extraction is favoured by high chloride content in the leaching brine. A suitable extractant has been found to be ACORGA ZNXSO™, although it is conceivable that other suitable solvating extractants may be used. The extractant selectively forms complexes with the zinc chloride and since the extractant is immiscible with water, it can be separated from the aqueous solution. Ideally, the zinc chloride can be recovered (stripped) from the extractant by contact with water to produce a pure zinc chloride solution for further treatment to recover zinc in a saleable form.

There are at least three methods using standard engineering systems to convert relatively dilute (30-60 g/L Zn) zinc chloride solution to saleable products. For a small plant, simply concentrating the solution by physical (reverse osmosis) and thermal (evaporation) operations to 60% or 70% ZnCl₂ is attractive. Concentrated ZnCl₂ solution is sold for direct use at a small premium (zinc content users) over the prevailing zinc metal price. However, the market is limited. For large scale dust processing, production of zinc metal is necessary to access a large market. Electrowinning of zinc can be done either directly on strip solution (with coproduct chlorine recycled to dust processing) or by converting the zinc chloride to zinc sulphate for conventional zinc electrolysis. Either method is technically feasible and may be preferred on a site specific basis. For a large dust processing plant there are capital advantages in locating near an existing electrolytic zinc plant.

Consequently, the specific embodiment illustrated in the drawings shows conversion of chloride to sulphate. Hydrochloric acid coproduct is recycled to dust leaching and concentrated zinc sulphate passes to solution purification/electrowinning in adjacent (existing) facilities.

During the process, cadmium and non-toxic metals (e.g., calcium, magnesium, manganese) present in the dust accumulate in the circulating solution. When one or a combination of these reaches a concentration which interferes with washing, a bleed stream is removed from the zinc solvent extraction raffinate and treated with air and an alkali (typically lime, CaO) to precipitate iron and manganese as oxides for disposal.

The bleed solution, low in manganese and iron is treated with a water soluble sulphide, such as sodium sulphide, at atmospheric pressure to precipitate the cadmium and any residual zinc as sulphides: ${\text{Na}}_{\text{2}} {\text{S + CdCl}}_{\text{2}} \text{→ CdS↓ + 2NaCl}$${\text{Na}}_{\text{2}} {\text{S + ZnCl}}_{\text{2}} \text{→ ZnS↓ + 2NaCl}$

As far as the reagents used in the process are concerned, the process consumes scrap iron which exits as hematite. Except for incomplete washing of the leach residue and the deliberate bleed, the system is closed for chloride. Required makeup of chloride can be by purchase of liquid chlorine or chloride pickle liquor. The latter is the preferred source of the first fill with chloride as well as make-up chloride, since, where it is locally available, it is generally a disposal problem and can thus be obtained at low or negligible cost.

Other consumables in the process are the zinc extraction reagent and neutralizing agent (lime).

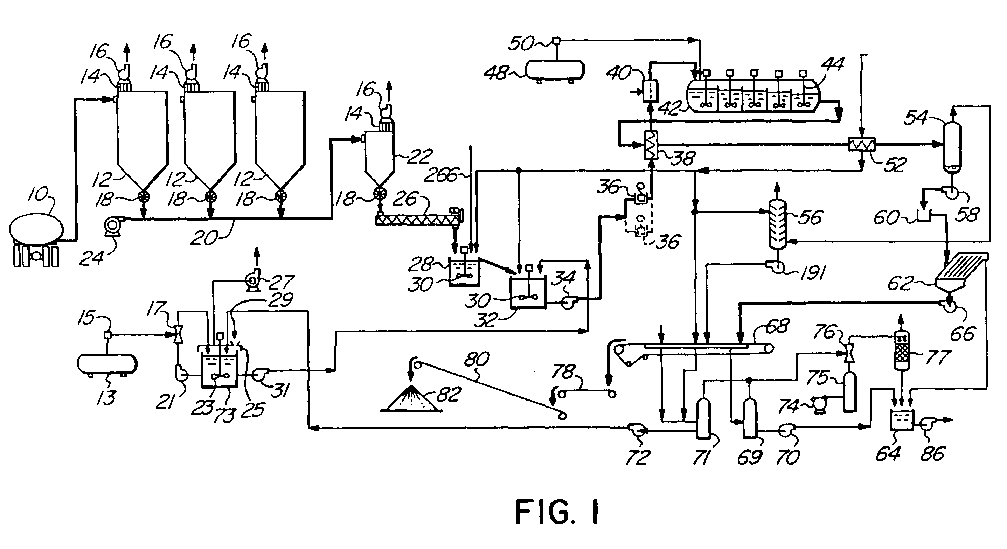

One specific embodiment of a system for the treatment of flue dust according to the invention will now be described with reference to Figures 1 to 5 of the accompanying drawings.

Referring first to Figure 1, dry, size classified (de-gritted) EAF dust is delivered pneumatically, e.g., from a transport truck 10, to storage bins or silos 12 equipped with bag filters 14 and fans 16 for venting air. From the silos 12, the dust is transferred via star valves 18 through conduit 20 to a plant feed silo 22 by means of compressor 24. The silo 22 is also provided with a bag filter 14 and fan 16 for venting air, as well as a star valve 18 for controlling the outflow of flue dust therefrom.

From the silo 22, the dust is fed by means of a variable speed auger feeder 26 to a first mixing tank 28 which is provided with an agitator 30. The dust is discharged into the tank 28 via a sock (not shown). The tank 28 is covered to counteract splash loss and operates below 60°C. From the tank 28, the feed flows by gravity to a second tank 32 also provided with an agitator 30. The tanks 28 and 32 contain recycle leach solutions including hydrochloric acid and raffinate, as well as fresh ferric chloride from reaction vessel 73, for the atmospheric leaching of the flue dust. In the present example, this is effected in two stages. From the tank 32, the liquid/solid slurry is pumped by means of a centrifugal pump 34 and a high pressure diaphragm pump 36 (the broken lines denote a spare pump 36) to a shell and tube heat exchanger 38 where the slurry is pre-heated by indirect heat exchange with product before passing through a heater 40 which is heated by a suitable heat source, such as a natural gas, where the temperature of the slurry is raised to about 175°C. The slurry is then introduced into an autoclave 42 which, in the present example, has five compartments, each provided with an agitator 44. Oxygen is introduced into the autoclave 42 from a bulk oxygen tank 48 via an oxygen vaporizer 50. Hydrous iron oxide and zinc ferrite in the autoclave feed are converted to the hematite form in the autoclave 42 with concurrent dissolution of zinc. In the present example, the heat treatment in the autoclave 42 is shown as a continuous process, but it can also be effected batchwise, if desired.

From the autoclave 42 the slurry exits, driven by autoclave pressure, to the heat exchanger 38, where it exchanges heat with the incoming colder slurry, and to a second shell and tube heat exchanger 52 for further cooling, and through a control choke to a flash tank 54 where the slurry is flashed down to atmospheric pressure. The exhaust passes through a gas scrubber 56 to atmosphere. The slurry is pumped by means of a flash tank slurry pump 58 via a pulp distributor 60 to a lamella thickener 62 where leach solution containing the dissolved zinc and lead ions, as well as other heavy metal ions, is separated from the solid residue. The separated liquid is passed to a tank 64. The solids from the thickener 62 are pumped via a thickener underflow pump 66 to a two-stage belt filter 68, with heater. On the filter 68 the solids are washed by reheated zinc solvent extraction raffinate with direct steam injection to maintain the temperature at 90°C and a final hot water wash.

Filtrate from the primary filtration stage of the belt filter 68 passes via filtrate receiver 69 and pump 70 to the tank 64. Combined filtrate from the hot brine and hot water washing stages of belt filtration passes via receiver vessel 71 and pump 72 to a mixing tank 73. In order to withstand exposure to the hot brine, all the wet equipment of the system is chloride proof.

The system includes an air compressor 74 and air receiver 75 which is connected via vacuum eductor 76 to condenser 77. Liquid from the condenser 77 passes to the tank 64. Both the receiver vessels 69 and 71 are connected to the vacuum eductor 76. An eductor (air or steam) is more efficient in this application than conventional filtrate vacuum pumps.

The hematite solid from the belt filter 68 is transferred to a collection conveyor 78 from where it is transferred via a stacking conveyor 80 to a hematite stock pile 82.

The system also includes a bulk chlorine tank 13 and chlorine evaporator 15 which are connected to chlorine eductor 17. The tank 73 is provided with a pump 21 in a recirculation line containing the chlorine eductor 17. Thus, chlorine gas is introduced into the tank 73 through the eductor 17. The tank 73 is provided with an agitator 23, a hood 25 and exhaust fan 27. The hood 25 has an opening for the introduction of shredded scrap metal into the tank 73, as indicated by the arrow 29. The chloride solution from tank 73 is pumped by means of pump 31 to the tank 32.

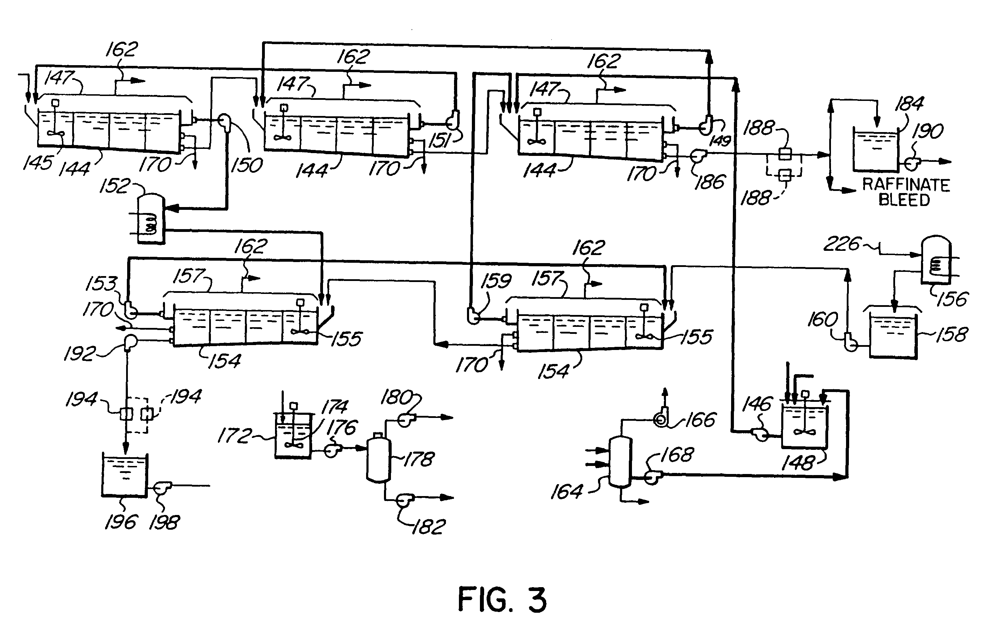

Zinc solvent extraction raffinate from the zinc solvent extraction circuit (Figure 3) and hydrochloric acid from the chloride to sulphate conversion, described below, are pumped to the mixing tanks 28 and 32.

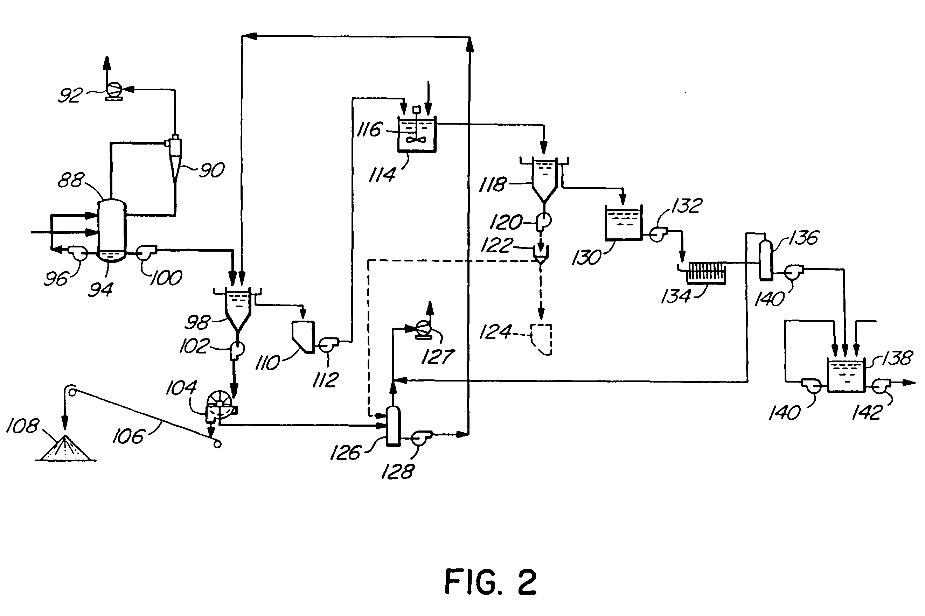

From the tank 64 the liquid is pumped by pump 86 to an evaporative crystallizer 88 (Figure 2) provided with cyclone 90 and vacuum exhaust pump 92. The concentrate 94 formed in the crystallizer 88 is continuously recirculated by a recirculating pump 96. From the crystallizer 88 the concentrate is transferred to a lead settling tank 98 by means of a transfer pump 100.

The settled lead chloride is pumped by means of underflow pump 102 to a drum filter 104 from where the lead chloride is transferred via a collection belt 106 to a stockpile 108.

The overflow from the settling tank 98 passes to a pump box 110 from where it is pumped by a transfer pump 112 to cementation vessel 114 with agitator 116. Shredded scrap metal is introduced into the vessel 114 where copper is precipitated and ferric chloride is reduced to the ferrous form which does not interfere with zinc solvent extraction. From the vessel 114 the product passes to a cementation settling tank 118. The underflow is pumped by underflow pump 120 to a pan filter 122, from where intermittently the copper/iron cement is passed to a tote 124 and the filtrate is passed to a filtrate receiver 126 provided with a vacuum pump 127 for exhaust air. Filtrate from the drum filter 104 is also passed to the filtrate receiver 126. From the filtrate receiver 126 the filtrate is pumped by filtrate pump 128 back to the lead settling tank 98.

The overflow from the settling tank 118 is passed to a zinc chloride holding tank 130 from where it is pumped by pump 132 to a zinc chloride clarifying filter 134 and then to a deaeration tower 136 and to a mixing tank 138 by pump 140. Hydrochloric acid is introduced into the mixing tank for pH control and the contents of the tank 138 is continuously circulated by circulating pump 140 for proper mixing. Air from the deaeration tower 136 is transferred to the vacuum pump line on the filtrate receiver 126 for exhaust.

The clarified zinc chloride pregnant solution is pumped from the tank 138 by pump 142 to the first of three solvent extraction contactors (mixer settlers) 144 (Figure 3) which are provided with agitators 145 and hoods 147. The contactors 144 are connected countercurrent to a 10% solution of ACORGA ZNX 50™ in an organic diluent which is pumped by pump 146 from organic mixing tank 148 to which the organic extractant and kerosene are added. As shown, the organic extractant is pumped to the third one of the contactors 144 and from there pumped by pump 149 to the second contactor 144 and then by pump 151 to the first contactor 144. The zinc chloride solution flows in series through the three contactors 144 where the organic extractant selectively removes zinc as zinc chloride from the high chloride brine.

From the first contactor 144 the zinc chloride loaded extractant is pumped by transfer pump 150 via a heater 152 to the first of two stripping contactors 154 provided with agitators 155 and hoods 157 where the organic is stripped by slightly acidified hot water. (In the alternative direct electrolysis route, stripping is by a dilute aqueous solution of sodium chloride and zinc chloride, the spent electrolyte from the zinc electrowinning cells). From the first contactor 154 the organic extractant is pumped by pump 153 to the second contactor 154 and from there it is pumped by pump 159 to the third one of the contactors 144, as shown. The strip solution is passed through a water heater 156 for heating the strip solution as recommended by the manufacturer of the ZNX-50 reagent. From the heater 156 the strip solution passes to a hot aqueous tank 158 from where it is pumped by pump 160 to the second of the two stripping contactors 154 and from there it goes to the first contactor 154.

Organic diluent vapour is recycled back from each of the contactors 144 and 154, as indicated by the arrows 162, to a solvent extraction exhaust condenser 164 with an exhaust fan 166. Fresh water is also introduced into the condenser 164. From the condenser 164 the condensed diluent is pumped by pump 168 to the mixing tank 148.

Crud from the contactors 144 and 154 is transferred by gravity, as indicated by the arrows 170, to a crud tank 172 with agitator 174. From the tank 172 crud is pumped by pump 176 to a crud centrifuge 178 from where the organic phase is pumped by pump 180 to the organic mixing tank 148 and the aqueous phase is pumped by pump 182 to a raffinate tank 184. Raffinate tank 184 receives the stripped raffinate from the contactors 144 through pump 186 via carbon column 188 (spare column 188 shown in broken lines). From the tank 184 raffinate is pumped by pump 190 via the heater 52 to the tanks 28, 32, as well as to the belt filter 68 and the gas scrubber 56. Liquid from the scrubber 56 is pumped by pump 191 to the belt filter 68 for washing purposes.

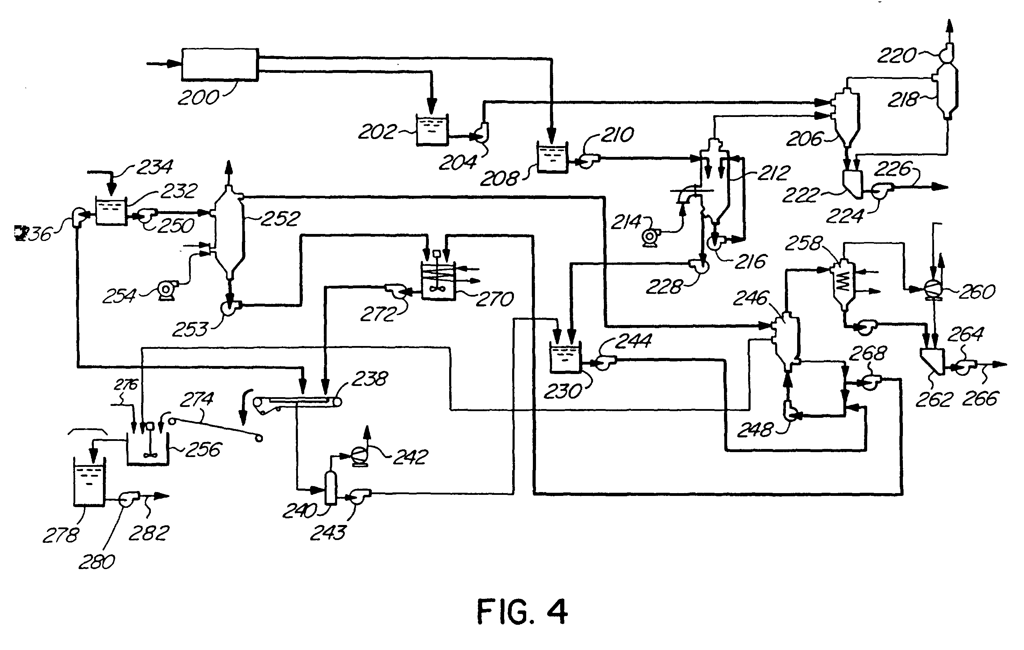

Pregnant strip solution is pumped from the contactors 154 by pump 192 via a carbon column 194 (spare column 194 in broken lines) to a tank 196 from where the solution is pumped by pump 198 to a reverse osmosis unit 200 (Figure 4).

The reverse osmosis unit 200 produces a permeate stream, which is essentially clean water, and a retentate stream, which is a concentrated zinc chloride solution. The permeate stream is received in permeate solution tank 202 from where it is pumped by pump 204 to a spray scrubber 206.

The retentate stream is received in retentate solution tank 208 from where it is pumped by discharge pump 210 to spray evaporator 212 where it is further concentrated. The evaporator 212 is connected to a source of natural gas and is also provided with a fan 214 for combustion air. A pump 216 is provided for recirculating the concentrate in the evaporator 212. Exhaust from the evaporator 212 passes to the scrubber 206. The scrubber 206 is connected to a de-mister 218 with an exhaust fan 220. The scrubber and de-mister underflow passes to a pump box 222 from where the solution is pumped by pump 224 to the water heater 156 (Figure 3), as indicated by the arrow 226.

Concentrated zinc chloride solution is pumped from the evaporator cone 212 by pump 228 to a stock tank 230.

Spent electrolyte (zinc sulphate/sulphuric acid solution) from a zinc refinery is introduced into stock tank 232, as indicated by the arrow 234 (Figure 4). Pump 236 pumps solution from the tank 232 to belt filter 238 where it serves as washing liquid for the filter 238. The filter 238 filters a zinc sulphate slurry as will be described below. The filtrate from the filter 238, which is a zinc sulphate solution, is received in filtrate receiver 240 which is provided with a vacuum pump 242. From the filtrate receiver 240 the filtrate is pumped by pump 243 to the stock tank 230.

The concentrated zinc chloride/zinc sulphate solution in stock tank 230 is pumped by pump 244 into the recirculation line of an evaporator crystallizer 246 provided with recirculation pump 248.

Zinc sulphate solution is also pumped from stock tank 232 by pump 250 to a natural gas boiler 252 with combustion air fan 254 in which the zinc sulphate solution is concentrated. Steam from the boiler 252 indirectly heats the evaporator 246, producing the necessary heat for its operation, the condensed steam and the resulting water passes to dissolver tank 256. Concentrated zinc sulphate solution is pumped from the boiler 252 by pump 253 to crystallization tank 270.

In the evaporator 246 hydrochloric acid is distilled off and condensed in condenser 258. The condenser 258 is connected to a vacuum pump 260 and hydrochloric acid from the condenser 258 together with raffinate from tank 184, as cooling fluid, is received in a sump 262, from where the acid solution is pumped by pump 264 to the tank 28 (Figure 1), as indicated by the arrow 266.

The concentrated zinc sulphate solution is pumped from the evaporator crystallizer circuit by pump 268 to crystallization tank 270 through which cooling water is circulated. This precipitates zinc sulphate from the solution and the slurry is pumped by pump 272 to the belt filter 238 where the solid zinc sulphate is received on collection conveyor 274 and introduced into the dissolver tank 256, where it is again dissolved in the water provided from the evaporator crystallizer 246. Additional fresh water is introduced into the dissolver tank 256, if required, as indicated by the arrow 276.

From the dissolver tank 256 the zinc sulphate solution is passed to a stock tank 278 from where it is pumped by pump 280 to a zinc refinery (not shown), as indicated by the arrow 282.

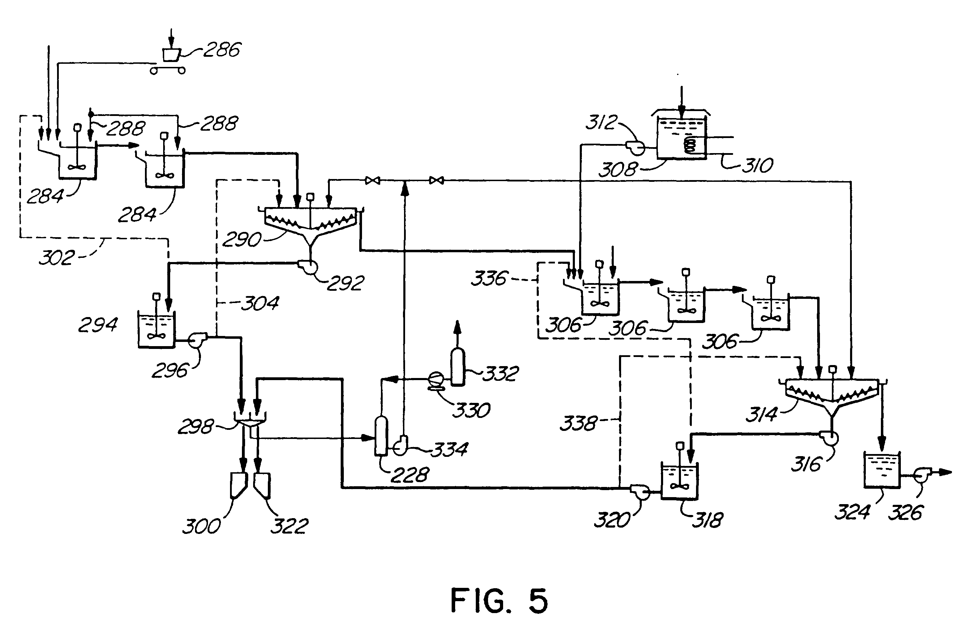

With reference now to Figure 5, a final stage in the process is illustrated in which the raffinate is further treated, in a two-stage process, to remove remaining heavy metals therefrom prior to disposal thereof to a sewer. The first stage comprises a lime treatment to remove iron and manganese as hydrous oxides and, thereafter, a sulphide treatment stage to remove heavy metals, such as cadmium, nickel, cobalt, as well as remaining lead, zinc and copper, as sulphides.

In the first stage, the raffinate from the tank 184 (Figure 3) is introduced into tanks 284. Hydrated lime from hydrated lime feeder 286, as well as compressed air, as indicated by the arrows 288, is also introduced into the tanks 284. The slurry from the tanks 284 is passed to a thickener 290 for thickening the precipitated iron and manganese hydrous oxides, which is then pumped by underflow pump 292 to a sludge tank 294 and then, via pump 296, to a duplex pan filter 298 and then to a manganese/iron waste tote 300. The dotted lines 302 and 304, respectively, indicate recirculation lines to ensure proper and complete treatment of the raffinate.

The overflow from the thickener 290 is passed to the second stage which comprises three holding tanks 306. Sodium hydrosulphide from a storage tank 308 with a heater 310 is pumped by pump 312 to the first of the three tanks 306. As shown, the three tanks 306 are connected in series. The heavy metal sulphides are precipitated in the tanks 306 and the resulting slurry is transferred to a thickener 314. The underflow is pumped by pump 316 to a heavy metals sludge storage tank 318 from where the sludge is pumped by pump 320 to the pan filter 298 and then to a heavy metals sludge tote 322.

The overflow from the thickener 314 is passed to a final effluent holding tank 324 from where it is pumped by pump 326 for disposal.

The filtrate from the pan filter 298 is passed to a filtrate receiver 328 provided with a vacuum pump 330 and pump silencer 332. From the filtrate receiver 328, the filtrate is pumped by pump 334 to the thickeners 290 and 314. The dotted lines 336 and 338 again indicate recirculation lines.

The following examples illustrate performance of the system according to the invention under preferred conditions of operation. The test samples for both examples were obtained from Western Canada Steel, Vancouver, B.C.

### Example 1

The objective of the example is to illustrate the leaching of "toxic" heavy metals from arc furnace flue dust.

The major heavy metals present in the flue dust were as follows:

| | |
|---|---|
| Lead (Pb) | 6.94% |
| Zinc (Zn) | 26.46% |
| Cadmium (Cd) | 0.08% |
| Iron (Fe) | 21.8% |

The particle size of the flue dust was as follows:
100% passing 500 microns
83.5% passing 38 microns

Leach solution was prepared by dissolving 300 grams of FeCl₃ in water, diluting to 1 litre volume and adding 2 millilitres of concentrated hydrochloric acid.

This solution was then mixed with 150 grams of flue dust, preheated to its atmospheric boiling point and transferred to a 2L autoclave. The autoclave was then closed and heated to a temperature of 175°C which was maintained (±2°C) for 90 minutes with continuous stirring.

After cooling, the products of the autoclave reaction were transferred to a beaker and allowed to settle at ambient temperature. Supernatant clear solution (approximately 0.8 litres) was decanted. Remaining pulp was heated to its atmospheric boiling point and then hot filtered on an (indirectly) steam heated filter plate. Filter cake was washed successively with two displacements of hot sodium chloride solution and two displacements of water. Wet cake was weighed and oven dried at 110°C.

### Residue characterization:

| | |
|---|---|
| Filter cake moisture content | 30% (approx.) |
| Filter cake dry weight | 89.6 g |
| | |
| Dry residue heavy metals | Zn<0.01% |
| | Pb<0.01% |

A subsample of dry reside was treated by leaching in dilute (pH 5.2) acetic acid solution according to a procedure equivalent to the USEPA Toxic Characteristic Leaching Procedure ("TCLP"). Leach solution heavy metal levels compared to USEPA criteria were as follows:

| | Concentration (milligrams/litre) | |
|---|---|---|
| | Test Leachate | USEPA Criterion |
| Arsenic | <0.02 | 5.0 |
| Cadmium | 0.005 | 1.0 |
| Chromium | <0.005 | 5.0 |
| Lead | 0.45 | 5.0 |
| Mercury | <0.02 | 0.1 |

The washed residue from the treatment process was non-hazardous with respect to landfill disposal.

Extraction of major heavy metals was >99% for lead and zinc.

### Example 2

Major heavy metals, wt % as oxide:

| | |
|---|---|
| Lead (PbO) | 3.3% |
| Zinc (ZnO) | 30.4% |
| Chromium (Cr₂O₃) | 0.28% |
| Cadmium (CdO) | 0.07% |
| Iron (Fe₂O₃) | 28.4% |
| Manganese (MnO) | 3.5% |

Other components, wt % as oxide:

| | |
|---|---|
| Silica (SiO₂) | 14.8% |
| Calcium (CaO) | 3.7% |
| Manganese (MnO) | 3.5% |
| Magnesium (MgO) | 2.0% |

Leach solution was prepared by dissolving 250 g of commercial ferric chloride hydrate (FeCl₃·6H₂O) and 154 g of calcium chloride (CaCl₂) in water, adding 2 millilitres of concentrated hydrochloric acid and diluting to a one litre volume. The solution contained 52 grams/litre of iron (as FeCl₃) and 199 grams/litre of chloride ion.

This solution was preheated to boiling, mixed with 150 grams of flue dust, then transferred to a 2 L autoclave.

After closure, the autoclave was pressurized with oxygen (50 psi), heated to 175°C and maintained (with stirring) at this temperature for 90 minutes. After cooling, the autoclave product slurry was discharged to a beaker for hot isothermal settling and decantation. The settled pulp was hot filtered. The filter cake was washed successively with two displacements each of hot calcium chloride brine and hot water. Decant and filtrate were combined and sampled hot for analyses. Filter cake was weighed, oven dried at 110°C, reweighed and analyzed.

### Residue characterization:

| | |
|---|---|
| Filter cake moisture | 29 wt % |
| Filter cake dry solids | 105 g |

Dry solids assay (wt %):

| | |
|---|---|
| Zinc (Zn) | 0.24% (indicated extraction 99.3%) |
| Lead (Pb) | 0.04% (indicated extraction 99.5%) |
| Iron (Fe) | 51% (indicated net precipitation of iron) |

Solution:

| | |
|---|---|
| emf, millivolts vs. SCE | 619 mV |
| Specific gravity | 1.20 |
| Free acid (grams/litre HCl) | 3.7 |
| Zinc (g/L) | 34 |
| Lead (g/L) | 8.9 |

The analysis of washed residue confirmed extractions >99% of zinc and lead.

Solution composition (i.e. use of a mixture of ferric and calcium chloride) approximates operation with recycle solution.

While only preferred embodiments of the invention have been described herein in detail, the invention is not limited thereby and modifications can be made within the scope of the attached claims.

## Claims

1. A process for the treatment of electric arc furnace dust, comprising a mixture of zinc, iron and lead oxides, which comprises the steps of:
leaching the dust with a leach solution containing ferric chloride to produce a slurry containing a hydrous iron oxide; and
converting the hydrous iron oxide to a filterable hematite by heat treatment of the slurry at an elevated temperature and pressure in the presence of free acid.

2. The process according to claim 1, wherein said heat treatment is carried out at a temperature of at least 140°C.

3. The process according to claim 1 or claim 2, further comprising the steps of:
dissolving zinc present in the dust during said leaching with said leach solution to provide a solution of zinc chloride; and
separating the zinc chloride from the solution by solvent extraction using a solvating extractant.

4. The process according to claim 3, wherein said leach solution also contains a non-ferric chloride.

5. The process according to claim 4, wherein the concentration of ferric chloride in said leach solution is from about 35 to about 40 grams per litre.

6. The process according to claim 5, wherein the non-ferric chloride is selected from the group consisting of calcium chloride, sodium chloride and potassium chloride and having a chloride concentration of about 140 grams per litre.

7. The process according to any one of claims 1 to 6, further comprising the step of dissolving lead present in the dust during said leaching of the slurry to provide a solution of lead chloride.

8. The process according to claim 7, further comprising the steps of subjecting the slurry to a liquid/solid separation step at a temperature of at least 80°C to provide a residue containing hematite and a solution containing zinc chloride and lead chloride; and
precipitating the lead chloride from the solution by cooling the solution to a temperature below 80°C.

9. The process according to claim 8, further comprising the steps of stripping the zinc chloride from the extractant to provide an aqueous zinc chloride solution and subjecting the zinc chloride solution to electrolysis to produce zinc metal and chlorine gas.

10. The process according to claim 8, further comprising the steps of stripping the zinc chloride from the extractant to provide an aqueous zinc chloride solution, treating the zinc chloride solution with sulphuric acid to produce a zinc sulphate solution and hydrochloric acid and recycling the hydrochloric acid to the leaching step.

11. A process for the treatment of electric arc furnace dust comprising a mixture of zinc, iron and lead oxides, which comprises the steps of:
reacting the dust with ferric chloride, in a solution containing at least about 140 g/L chloride, at an elevated temperature and pressure to produce a filterable hematite reside and to dissolve lead and zinc present in the dust to form a solution containing zinc chloride and lead chloride; and
separating the zinc chloride from the solution by solvent extraction using a solvating extractant.

12. The process according to claim 11, further comprising the step of, prior to reacting the dust with ferric chloride at an elevated temperature and pressure, leaching the dust with a leach solution containing ferric chloride at atmospheric pressure.

13. The process according to claim 12, wherein said elevated temperature is at least 140°C.

## Patentansprüche

1. Verfahren zur Behandlung von eine Mischung von Zink-, Eisen- und Bleioxiden enthaltendem Lichtbogenofenstaub, welches die Schritte umfaßt:
Auslaugen des Staubs mit einer Eisen(III)-chlorid enthaltenden Auslaugelösung, um eine Eisenoxidhydrat enthaltende Aufschlämmung zu erzeugen; und
Überführen des Eisenoxidhydrats in einen filtrierbaren Hämatit durch Wärmebehandlung der Aufschlämmung bei erhöhter Temperatur und Druck in Gegenwart von freier Säure.

2. Verfahren nach Anspruch 1, worin die Wärmebehandlung bei einer Temperatur von mindestens 140°C durchgeführt wird.

3. Verfahren nach Anspruch 1 oder Anspruch 2, welches weiters die Schritte umfaßt:
Lösen von in dem Staub vorhandenem Zink während des Auslaugens mit der Auslaugelösung, um eine Lösung von Zinkchlorid vorzusehen; und
Abtrennen des Zinkchlorids aus der Lösung durch Solvent-Extraktion unter Verwendung eines solvatisierenden Extraktionsmittels.

4. Verfahren nach Anspruch 3, worin die Auslaugelösung auch ein Nichteisenchlorid enthält.

5. Verfahren nach Anspruch 4, worin die Eisen(III)-chlorid-Konzentration in der Auslaugelösung etwa 35 bis etwa 40 Gramm pro Liter beträgt.

6. Verfahren nach Anspruch 5, worin das Nichteisenchlorid aus der aus Calciumchlorid, Natriumchlorid und Kaliumchlorid bestehenden Gruppe ausgewählt ist und eine Chloridkonzentration von etwa 140 Gramm pro Liter hat.

7. Verfahren nach einem der Ansprüche 1 bis 6, welches weiters den Schritt des Lösens von in dem Staub vorhandenem Blei während des Auslaugens der Aufschlämmung umfaßt, um eine Lösung von Bleichlorid vorzusehen.

8. Verfahren nach Anspruch 7, das weiters die Schritte umfaßt,
daß die Aufschlämmung einem Flüssig/Fest-Trennschritt bei einer Temperatur von mindestens 80°C ausgesetzt wird, um einen Hämatit enthaltenden Rückstand und eine Zinkchlorid und Bleichlorid enthaltende Lösung vorzusehen; und
daß das Bleichlorid aus der Lösung durch Abkühlen der Lösung auf eine Temperatur unter 80°C ausgefällt wird.

9. Verfahren nach Anspruch 8, das weiters die Schritte Strippen des Zinkchlorids aus dem Extraktionsmittel, um eine wäßrige Zinkchloridlösung vorzusehen, und Elektrolysieren der Zinkchloridlösung, um Zinkmetall und Chlorgas zu erzeugen, umfaßt.

10. Verfahren nach Anspruch 8, das weiters die Schritte Strippen des Zinkchlorids aus dem Extraktionsmittel, um eine wäßrige Zinkchloridlösung vorzusehen, Behandeln der Zinkchloridlösung mit Schwefelsäure, um eine Zinksulfatlösung und Salzsäure zu erhalten, und Rückführen der Salzsäure zum Auslaugeschritt umfaßt.

11. Verfahren zur Behandlung von eine Mischung von Zink-, Eisen- und Bleioxiden enthaltendem Lichtbogenofenstaub, das die Schritte umfaßt:
Umsetzung des Staubs mit Eisen(III)-chlorid in einer mindestens etwa 140 g/l Chlorid enthaltenden Lösung bei erhöhter Temperatur und Druck, um einen filtrierbaren Hämatitrückstand zu erhalten und in dem Staub vorhandenes Blei und Zink zu lösen, um eine Zinkchlorid und Bleichlorid enthaltende Lösung zu bilden; und
Abtrennen des Zinkchlorids aus der Lösung durch Solvent-Extraktion unter Verwendung eines solvatisierenden Extraktionsmittels.

12. Verfahren nach Anspruch 11, das weiters den Schritt umfaßt, daß vor der Umsetzung des Staubs mit Eisen(III)-chlorid bei erhöhter Temperatur und Druck der Staub mit einer Eisen(III)-chlorid enthaltenden Auslaugelösung bei Atmosphärendruck ausgelaugt wird.

13. Verfahren nach Anspruch 12, worin die erhöhte Temperatur mindestens 140°C beträgt.

## Revendications

1. Procédé de traitement de la poussière d'un four à arc électrique, comprenant un mélange d'oxydes de zinc, de fer et de plomb, qui comporte les étapes consistant à :
lixivier la poussière au moyen d'une solution de lixiviation contenant du chlorure ferrique pour produire une suspension contenant un oxyde de fer hydraté; et
convertir l'oxyde de fer hydraté en hématite filtrable par traitement thermique de la suspension à une température et une pression élevées en présence d'acide libre.

2. Procédé suivant la revendication 1, dans lequel le traitement thermique est effectué à une température d'au moins 140°C.

3. Procédé suivant la revendication 1 ou 2, comportant, en outre, les étapes consistant à :
dissoudre le zinc présent dans la poussière pendant la lixiviation au moyen de la solution de lixiviation pour produire une solution de chlorure de zinc; et
séparer le chlorure de zinc de la solution par extraction par solvant en utilisant un solvant d'extraction solvatant.

4. Procédé suivant la revendication 3, dans lequel la solution de lixiviation contient également un chlorure non ferrique.

5. Procédé suivant la revendication 4, dans lequel la concentration en chlorure ferrique dans la solution de lixiviation est d'environ 35 à environ 40 grammes par litre.

6. Procédé suivant la revendication 5, dans lequel le chlorure non ferrique est sélectionné dans le groupe constitué de chlorure de calcium, de chlorure de sodium et de chlorure de potassium et présente une concentration en chlorure d'environ 140 grammes par litre.

7. Procédé suivant l'une quelconque des revendications 1 à 6, comportant en outre l'étape consistant à dissoudre le plomb présent dans la poussière pendant la lixiviation de la suspension pour fournir une solution de chlorure de plomb.

8. Procédé suivant la revendication 7, comportant en outre les étapes consistant à soumettre la suspension à une étape de séparation liquide/solide à une température d'au moins 80°C pour fournir un résidu contenant de l'hématite et une solution contenant du chlorure de zinc et du chlorure de plomb; et
précipiter le chlorure de plomb de la solution en refroidissant la solution à une température inférieure à 80°C.

9. Procédé suivant la revendication 8, comportant en outre les étapes consistant à extraire par lavage le chlorure de zinc du solvant d'extraction pour fournir une solution de chlorure de zinc aqueuse, et soumettre la solution de chlorure de zinc à une électrolyse pour produire du zinc métallique et du chlore gazeux.

10. Procédé suivant la revendication 8, comportant en outre les étapes consistant à extraire par lavage le chlorure de zinc du solvant d'extraction pour fournir une solution de chlorure de zinc aqueuse, traiter la solution de chlorure de zinc au moyen d'acide sulfurique pour produire une solution de sulfate de zinc et d'acide chlorhydrique et recycler l'acide chlorhydrique vers l'étape de lixiviation.

11. Procédé de traitement de la poussière d'un four à arc électrique comprenant un mélange d'oxydes de zinc, de fer et de plomb, qui comporte les étapes consistant à :
faire réagir la poussière avec du chlorure ferrique, dans une solution contenant au moins 140 g/L de chlorure environ, à une température et une pression élevées pour produire un résidu d'hématite filtrable et pour dissoudre le plomb et le zinc présents dans la poussière en vue de former une solution contenant du chlorure de zinc et du chlorure de plomb; et
séparer le chlorure de zinc de la solution par extraction par solvant en utilisant un solvant d'extraction solvatant.

12. Procédé suivant la revendication 11, comportant, en outre, l'étape consistant à lixivier la poussière au moyen d'une solution de lixiviation contenant du chlorure ferrique à pression atmosphérique, avant de faire réagir la poussière avec du chlorure ferrique à une température et une pression élevées.

13. Procédé suivant la revendication 12, dans lequel ladite température élevée est au moins de 140°C.
